# EUROPÄISCHE PATENTSCHRIFT

(11) **EP 3 666 696 B1**
(45) Veröffentlichungstag und Bekanntmachung des Hinweises auf die Patenterteilung: **26.11.2025**
(21) Anmeldenummer: 19211878.4
(22) Anmeldetag: 27.11.2019
(51) Int. Cl.: B65G 59/00, B65G 59/02

(54) **VORRICHTUNG UND VERFAHREN ZUR SCHICHTWEISEN HANDHABUNG VON ÜBEREINANDER ANGEORDNETEN STÜCKGUTLAGEN**
DEVICE AND METHOD FOR HANDLING LAYERS OF PIECE GOODS ARRANGED ONE ABOVE THE OTHER
DISPOSITIF ET PROCEDE POUR MANIPULER DES COUCHES DE MARCHANDISES UNITAIRES SUPERPOSEES

(30) Priorität: 14.12.2018 DE 102018132242
(43) Veröffentlichungstag der Anmeldung: 17.06.2020
(73) Patentinhaber: KRONES Aktiengesellschaft, 93073 Neutraubling (DE)
(72) Erfinder: KOEHL, Bernd, 93073 Neutraubling (DE); LINNER, Johann, 93073 Neutraubling (DE); PERL, Kurt, 93073 Neutraubling (DE); KINDERMANN, Dieter, 93073 Neutraubling (DE)
(74) Vertreter: Benninger, Johannes

(56) Entgegenhaltungen:
- EP-A1- 3 025 988
- CN-U- 203 095 170
- DE-A1- 19 515 998
- JP-A- H08 225 154
- US-A- 5 256 028

## Beschreibung

Die vorliegende Erfindung betrifft eine Vorrichtung und ein Verfahren zur schichtweisen Handhabung von übereinander angeordneten Stückgutlagen gemäß den Merkmalen der unabhängigen Ansprüche.

Die vorliegende Erfindung betrifft eine Vorrichtung zum schichtweisen Entladen von übereinander gestapelten Behälterlagen. In der Lebensmittelindustrie, aber auch in anderen Bereichen werden leere zur Befüllung vorgesehene Behälter, beispielsweise Getränkebehälter wie Flaschen aus Glas oder einem geeigneten Kunststoff, insbesondere PET o.ä. oder auch Dosen, beispielsweise aus Kunststoff, Aluminium, Blech o.ä. benötigt. Diese werden häufig auf Paletten zur Verfügung gestellt, wobei die Behälter in der Regel in mehreren Lagen übereinandergestapelt sind. Zwischen den einzelnen Lagen sind dabei meist Zwischenlagen zur Stabilisierung und Bereitstellung einer Standfläche für die Behälter angeordnet. Die Zwischenlagen weisen vorzugsweise eine gewisse Stabilität auf und werden beispielsweise aus Karton oder einem festeren flächigen Kunststoffmaterial gebildet. Um die derart gestapelten Behälter in der Produktion verwenden zu können, beispielsweise um die Behälter mit einem geeigneten Inhalt zu befüllen o.ä., müssen diese zuerst entpalettiert und anschließend der weiteren Verarbeitung zugeführt werden. Hierzu wird in der Regel jeweils die oberste Behälterlage auf eine geeignete Fläche oder abführende Transporteinrichtung übergeschoben und von dort aus werden die Behälter der weiteren Produktion zugeführt.

Bekannterweise umfassen hierfür geeignete Entstapelungsvorrichtungen einen Verschiebrahmen, der über die oberste, abzuschiebende Lage gestülpt wird, dabei die Lage von allen Seiten umfasst und dafür sorgt, dass beim Überschieben der Lage die Relativ- Positionen der Behälter zueinander und innerhalb der Lage im Wesentlichen beibehalten werden. Der Verschieberahmen verhindert insbesondere ein Umkippen der Behälter beim Überschieben.

Die unter den Behältern der abzuschiebenden Lage angeordnete Zwischenlage wird während des Abschiebens vorzugsweise fixiert, da die eine Vorrichtung und ein Verfahren zur schichtweisen Handhabung von übereinander angeordneten Stückgutlagen ansonsten beim Abschieben der Lage leicht mitgezogen würde, was in der Regel die weitere Verarbeitung stören würde. Die Zwischenlage wird in einem nachfolgenden Verfahrensschritt abgenommen, um anschließend die darunterliegende Lage von Behältern bearbeiten zu können.

Eine solche Vorrichtung zum schichtweisen Entladen von übereinander gestapelten Artikellagen ist beispielsweise in der Patentschrift DE 26 35 638 C2 beschrieben. Die Vorrichtung umfasst einen Verschieberahmen zum Abschieben der jeweilig zu depalettierenden Artikellage und einen Papplagenhalter, der die Pappzwischenlage während des Abschiebens der Artikellage festhält.

Die Gebrauchsmusterschrift DE 20 2013 103 400 U1 beschreibt einen Entstapler für Behälterlagen mit einem höhenverstellbaren Lagenschieber und einem höhenverstellbaren Abschiebeboden zum Abschieben der Behälterlage sowie einem Lagenhalter zur Sicherung der jeweils nächstunteren Behälterlage.

Um die Zwischenlage zu fixieren müssen die hierfür vorgesehenen Haltemittel an der Zwischenlage derart angreifen, dass das Abschieben der Behälterlage nicht gestört wird. Zudem sollten die Haltemittel in der Regel nur an Bereichen der Zwischenlage angreifen, auf denen keine Behälter aufstehen. Somit ist die Positionierung der Haltemittel jeweils von den zu depalettierenden Behältern und deren Anordnung innerhalb der Lage abhängig. Bei einem Produktwechsel müssen in Abhängigkeit von der Behältergröße, Behälterform, Behälteranordnung etc. in der Regel die Positionen der Haltemittel entsprechend angepasst werden. Gegebenenfalls müssen die Haltemittel auch komplett ausgetauscht werden, um den jeweiligen Produktanforderungen gerecht zu werden.

Bekannterweise kommen als Haltemittel verschiedenste Arten von Greifzangen zum Einsatz. Je nach Anwendungsfall werden zwischen zwei und vier Greifzangeneinheiten eingesetzt. Diese werden beim Produktwechsel einmalig von Hand, auf die jeweilige Behältergröße eingestellt und bis zum nächsten Formatwechsel so beibehalten.

Die Patentschrift CN 103 612 918 B offenbart beispielsweise eine Flaschenentlademaschine mit einem Rahmen, einen Flaschenhubmechanismus und einem Flaschenüberschubmechanismus. Die Zwischenlage wird durch einen Zwischenlagengreifer gehalten, während die Flaschen abgeschoben werden.

Die Gebrauchsmusterschriften CN 203 095 165 U und CN 203 602 055 U und die japanische Schrift JP 3597884 zeigen ebenfalls Entladevorrichtungen, wobei jeweils Klemmgreifer zum Halten der Zwischenlage vorgesehen sind.

Die Offenlegungsschrift US 5256028 A, welche die Merkmale des Oberbegriffs des Anspruchs 1 offenbart, beschreibt eine Vorrichtung zum Handhaben von Material, dass auf einer Tragefläche (= Zwischenplatte) angeordnet ist. Die Zwischenplatten können durch Klemmmittel fixiert werden.

Die Offenlegungsschrift DE 19515998 A offenbart ein Verfahren und eine Vorrichtung zum Depalettieren mit einer Zwischenplatte zwischen den Stapellagen, die seitlich mit einem Überstand vorsteht. Die Zwischenplatte wird seitlich mittels Klemmbacken lagefixiert.

Die Gebrauchsmusterschrift CN 203095170 U beschreibt eine Flaschenentlademaschine. An einem Greifer sind einander gegenüberliegend angeordnete Klemmmittel vorgesehen, die an gegenüberliegenden Seiten der Zwischenlage angreifen und diese dabei zwischen sich fixieren. Hierbei wirken diese Klemmmittel bei der Entnahme der Zwischenlage mit den Saugnäpfen zusammen. Zu diesem Zeitpunkt sind keine Artikel mehr auf der Zwischenlage angeordnet.

Die Offenlegungsschrift JP H08225154 A4 offenbart zwei Klemmvorrichtungen, die an einer Längsseite der Zwischenlage angreifen. Die Klemmvorrichtungen sind jeweils an einer Spindelverstellung angeordnet, so dass die Position eingestellt werden kann.

Die Offenlegungsschrift EP 3025988 A1 beschreibt eine Transfervorrichtung zum Transferieren vorgeformter Lagen von Produkten zwischen einem externen Förderer und einer Palette, auf der Lagen einen Stapel bilden können, wobei die Transfervorrichtung eine Stützstruktur mit mindestens einer vertikalen Führungssäule umfasst, weiterhin einen Boden, der an der mindestens einen Führungssäule montiert ist und die vorgeformte Lage aufnimmt und ein Werkzeug zum Überführen einer Lage, das an der Stützstruktur montiert ist.

Die Aufgabe der Erfindung besteht darin, eine Vorrichtung und ein Verfahren zur schichtweisen Handhabung von übereinander angeordneten Lagen von Stückgütern bereitzustellen, die bei einem Produktwechsel schnell und kostengünstig an das neue Produkt angepasst werden kann.

Die obige Aufgabe wird durch Vorrichtung und ein Verfahren zur schichtweisen Handhabung von übereinander angeordneten Lagen von Stückgütern gelöst, die die Merkmale in den unabhängigen Patentansprüchen umfassen. Weitere vorteilhafte Ausgestaltungen werden durch die Unteransprüche beschrieben.

Die übereinander angeordneten Stückgutlagen umfassen jeweils eine Mehrzahl von Stückgütern, die insbesondere gemäß einem definierten Lagenschema angeordnet sind. Zwischen den einzelnen Stückgutlagen ist jeweils eine flächig ausgebildete Zwischenlage angeordnet. Bei den Stückgütern kann es sich insbesondere um Einzelartikel, insbesondere Behälter, Flaschen und/oder Dosen, handeln. Diese können befüllt oder leer sein, es kann sich hierbei sowohl um Einwegartikel als auch um Mehrwegverpackungen handeln. Insbesondere werden solche Vorrichtungen verwendet, um Paletten mit sauberen Leergutflaschen zu entladen, damit diese in nachfolgenden Produktionsschritten befüllt und für den Verkauf zusammengestellt werden können. Die Zwischenlagen sind vorzugsweise aus einem steifen Papier, einem Karton oder einem Kunststoffmaterial gebildet.

Die Vorrichtung umfasst mindestens einen Rahmen mit einem innerhalb des Rahmens horizontal beweglich ausgebildeten Verschieberahmen für die Stückgutlage, insbesondere zum Abschieben der jeweilig obersten Stückgutlage. Weiterhin ist mindestens eine Zwischenlagenentnahmevorrichtung vorgesehen, die eine auf einer jeweilig obersten Stückgutlage angeordnete Zwischenlage abnimmt und beispielsweise in ein Magazin o.ä. überführt, bevor die jeweils oberste Stückgutlage auf eine abführende Transporteinrichtung überführt wird, um die Stückgüter der weiteren Verarbeitung zuzuführen.

Insbesondere werden die Stückgüter der Stückgutlage beim Abschieben oder Überschieben durch den Verschieberahmen allseitig fixiert. Hierfür umfasst der Verschieberahmen beispielsweise vier gegeneinander zustellbare Zentrierwände, zwischen denen die Stückgüter geklemmt und somit in ihrer Position relativ zueinander fixiert werden.

Durch eine Horizontalbewegung des Verschieberahmens in einer Überschubrichtung wird die jeweilig geklemmte Stückgutlage auf die abführende Transporteinrichtung überführt, wobei die Stückgutlage gegebenenfalls über einen Überschubbereich geführt werden kann, der sich in derselben Horizontalebene oder im Wesentlichen in derselben Horizontalebene wie die unterhalb der Stückgutlage angeordnete Zwischenlage befindet. Die abführende Transporteinrichtung weist eine Förderfläche für die Stückgutlage auf, die ebenfalls in derselben Horizontalebene oder gegebenenfalls geringfügig unterhalb der Horizontalebene angeordnet ist.

Damit die unterhalb der obersten Stückgutlage angeordnete Zwischenlage während des Abschiebens oder Überschiebens der obersten Stückgutlage in Richtung der abführenden Transporteinrichtung nicht mitgezogen wird, umfasst die Vorrichtung mindestens eine Fixiervorrichtung für die Zwischenlage. Die Fixiervorrichtung weist mindestens zwei Fixiermittel zum Festhalten der Zwischenlage auf. Insbesondere ist vorgesehen, dass die Fixiermittel zwischen jeweils benachbarten Stückgütern der obersten Stückgutlage eingreifen und die Zwischenlage festhalten, während die Stückgutlage in Überschubrichtung abgeschoben wird. Durch entsprechende Anordnung der Fixiermittel wird ein Kontakt zwischen den Fixiermitteln und den Stückgütern verhindert, der zu einer Beschädigung oder einem Verschieben oder einem Umkippen der Stückgüter führen könnte. In Abhängigkeit der jeweiligen Stückgüter der Stückgutlage müssen die Fixiermittel bei einem Produktwechsel neu positioniert werden, um an einer jeweilig optimierten Position an der Zwischenlage angreifen zu können. Um eine einfache Verstellung der beiden Fixiermittel zu ermöglichen, ist vorgesehen, dass die mindestens zwei Fixiermittel gegeneinander verstellbar ausgebildet sind.

Erfindungsgemäß ist mindestens ein Detektionsmittel, insbesondere ein Sensor, zur Erkennung der Stückgüter einer obersten Stückgutlage und/oder zur Erkennung der unterhalb der obersten Stückgutlage angeordneten Zwischenlage vorgesehen. Beispielsweise können mittels Kameraerkennung Zwischenbereiche zwischen den Stückgütern erkannt werden. Die ermittelten Informationen können verwendet werden, um die Fixiermittel der Fixiervorrichtung korrekt zu positionieren, so dass diese jeweils zwischen Stückgütern an der Zwischenlage angreifen. Hierzu erkennt der mindestens eine Sensor Positionsdaten und/oder andere Erfassungswerte der Stückgüter und/oder der Zwischenlage und übermittelt diese Informationen an eine Steuerungseinrichtung der Vorrichtung. Die Steuerungseinrichtung ermittelt daraus einen zwischen den mindestens zwei Fixiermitteln einzustellenden Abstand und steuert wiederum die Einstellmittel für die Fixiermittel, beispielsweise Linearmotoren o.ä. an, um die berechnete Position der Fixiermittel einzustellen.

Gemäß einer Ausführungsform der Erfindung sind die Fixiermittel in einer gemeinsamen Horizontalebene angeordnet und es kann ein Abstand zwischen den Fixiermitteln innerhalb der Horizontalebene eingestellt werden. Der Abstand wird dabei so gewählt, dass die Fixiermittel jeweils zwischen zwei benachbarten Stückgütern an der Zwischenlage angreifen. Die Einstellung der Position der mindestens zwei Fixiermittel und dementsprechend des Abstandes zwischen den mindestens zwei Fixiermitteln kann beispielsweise mittels geeigneter Linearmotoren erfolgen, die den Fixiermitteln jeweils zugeordnet sind.

Die Fixiermittel sind beispielsweise als Klemmgreifer oder Zangengreifer ausgebildet, wobei das Schließen der Fixiermittel zum Fixieren der Zwischenlage und das Öffnen der Fixiermittel zur Freigabe der Zwischenlage vorzugsweise vermittels Pneumatikzylinder, elektromotorischer Antriebe oder Elektrozylinder, d.h. elektrischer Linearantriebe o. dgl., realisiert werden kann.

Gemäß einer Ausführungsform ist vorgesehen, dass die Fixiervorrichtung dem Rahmen der Vorrichtung zugeordnet ist. Ein erster Teilbereich des Rahmens erstreckt sich oberhalb der zu handhabenden Stückgutlage und ein zweiter Teilbereich des Rahmens erstreckt sich oberhalb der abführenden Transporteinrichtung. Beispielsweise ist vorgesehen, dass sich der Rahmen in etwa hälftig oberhalb der zu handhabenden Stückgutlage und in etwa hälftig oberhalb der abführenden Transporteinrichtung erstreckt. Der Rahmen begrenzt innerhalb einer Horizontalebene vorzugsweise eine rechteckige Fläche mit einer Breite, die größer ist als die Breite der zu handhabenden Stückgutlagen und einer Länge die mindestens zweimal der Länge der zu handhabenden Stückgutlagen entspricht. Insbesondere weist der Rahmen erste Rahmenelemente der oben genannten Breite auf, die quer zu einer Überschubrichtung für die Stückgutlagen angeordnet sind und zweite Rahmenelemente der oben genannten Länge, die parallel zur Überschubrichtung für die Stückgutlagen angeordnet sind.

Das in Überschubrichtung hintere erste Rahmenelement des Rahmens ist einer in Überschubrichtung hinteren Kante des Stückgutlagenstapels zugeordnet, während das in Überschubrichtung vordere erste Rahmenelement oberhalb der abführenden Transporteinrichtung angeordnet ist. Der Verschieberahmen kann jeweils zwischen den ersten Rahmenelementen hin- und herbewegt werden, wobei die Bewegung vom Stückgutlagenstapel in Richtung der abführenden Transporteinrichtung die Bewegung in Überschubrichtung darstellt. Der Rahmen begrenzt insbesondere den Bewegungsbereich des Verschieberahmens

Die Fixiervorrichtung ist vorzugsweise dem hinteren ersten Rahmenelement zugeordnet, d.h. die Fixiervorrichtung ist quer zu der Überschubrichtung der Stückgutlagen angeordnet. Insbesondere ist die Fixiervorrichtung unabhängig vom Verschieberahmen am Rahmen der Vorrichtung angeordnet. Bei dieser Ausführungsform kann somit der Abstand zwischen den Fixiermitteln quer zu der Überschubrichtung beim Abschieben der Stückgutlagen produktabhängig eingestellt werden.

Die Fixiermittel können beispielsweise jeweils auf Laufschlitten an einer Laufschiene angeordnet sein. Die Laufschiene ist vorzugsweise parallel zu dem hinteren ersten Rahmenelement angeordnet. Durch ein Verschieben der Laufschlitten entlang der Laufschienen kann die Position der Fixiermittel entsprechend neu eingestellt werden. Dabei kann sich der Abstand zwischen zwei Fixiermitteln verändern. Gemäß einer weiteren Ausführungsform kann jedoch auch vorgesehen sein, dass zwar die Position der Fixiermittel innerhalb der Fixiervorrichtung verändert wird, sich jedoch der relative Abstand zwischen zwei benachbarten Fixiermitteln dabei nicht ändert. Die Verstellung der Fixiermittel kann beispielsweise über geeignete Linearmotoren erfolgen.

Um ein Umkippen der Stückgüter in die Gegenrichtung und Eintritt in den Bereich zwischen die mindestens zwei Fixiermittel zu verhindern, ist mindestens eine Abdeckvorrichtung vorgesehen. Diese deckt einen Bereich zwischen den mindestens zwei Fixiermitteln ab. Weiterhin können jeweils seitliche Bereiche abgedeckt werden, so dass die in Richtung der Stückgutlage weisende Seite der Fixiervorrichtung eine weitgehend geschlossene Fläche bildet. Insbesondere ist die Abdeckvorrichtung derart ausgestaltet, dass bei einer Positionsänderung der Fixiermittel die von der Abdeckvorrichtung bedeckte Fläche unverändert oder nahezu unverändert bleibt. Beispielsweise kann die Abdeckvorrichtung Blendenelemente umfassen, insbesondere erste feststehende Blendenelemente und zweite bewegliche Blendenelemente, wobei die zweiten beweglichen Blendenelemente insbesondere relativ zu den feststehenden ersten Blendenelementen verschieblich sind. Die Fixiermittel sind beispielsweise in Lücken zwischen ersten feststehenden Blendenelementen beweglich ausgebildet. Die Lücken begrenzen hierbei den Bewegungsraum der Fixiermittel. Um die Lücken in Richtung der Stückgutlage weitgehend abzudecken, sind die beweglichen zweiten Blendenelemente insbesondere den Fixiermitteln zugeordnet und gemeinsam mit diesen beweglich.

Die Abdeckvorrichtung kann beispielsweise durch sogenannte Schottwände oder Führungswände gebildet werden, die sich zu beiden Seiten der jeweiligen Fixiermittel erstrecken. Durch die Schottwände oder Führungswände wird eine weitgehend geschlossene Fläche gebildet, die nur im Bereich der Fixiermittel eine minimierte Unterbrechung aufweist. Die Schottwände oder Führungswände sind gemeinsam mit den Fixiermitteln verstellbar ausgebildet. Beispielsweise werden die Schottwände oder Führungswände durch übereinander schiebbare Kulissen gebildet.

Die automatisierte Einstellung der Position der Fixiermittel, insbesondere die Anordnung der Fixiermittel relativ zueinander und Anpassung an die jeweilig zu handhabende Stückgutlage, erlaubt eine schnelle Anpassung der Vorrichtung bei einem Produktwechsel, da eine zeitaufwändige manuelle Verstellung oder ein manueller Umbau der Vorrichtung entfällt. Insbesondere ermöglicht die sensorgestützte, automatische, selektive Verstellung durch optische Erkennung der Zwischenräume im Lagenbild o.ä. sogar die Handhabung von Paletten mit unterschiedlich ausgebildeten, übereinander angeordneten Stückgutlagen. Die Vorrichtung und das Verfahren sind insbesondere vorteilhaft, wenn nicht alle Stückgutlagen auf einer Palette homogen aufgebaut sind, da die Fixiermittel im laufenden Produktionsbetrieb gemäß der zu handhabenden Stückgutlage eingestellt werden können, ohne dass eine Unterbrechung der Produktion zur manuellen Umstellung erforderlich ist.

Die Fixierung der Zwischenlagen vermittels einer dargestellten Fixiervorrichtung kann sowohl für eine erste Ausführungsform von Vorrichtungen zur schichtweisen Handhabung von übereinander und auf flächig ausgebildeten Zwischenlagen angeordneten Stückgutlagen eingesetzt werden, bei denen der Verschieberahmen höhenverstellbar ausgebildet ist und die die Stückgutlage in ihrer jeweiligen Höhe von der Palette abholt. In diesem Fall umfasst die Vorrichtung weiterhin eine höhenverstellbare Überschubplatte, auf die die Stückgutlage in einem ersten Verfahrensschritt vermittels des Verschieberahmens übergeschoben wird. Die Überschubplatte mit der durch den Verschieberahmen zentrierten Stückgutlage wird dann auf die Höhe der abführenden Transporteinrichtung gebracht und die Stückgutlage wird auf die Transporteinrichtung übergeschoben.

Die Fixierung der Zwischenlagen kann auch für eine zweite Ausführungsform von Vorrichtungen eingesetzt werden, bei denen der Verschieberahmen und die abführenden Transporteinrichtung in einer feststehenden Höhe angeordnet sind. In diesem Fall ist eine Hubeinrichtung für die Palette mit den übereinander und auf flächig ausgebildeten Zwischenlagen angeordneten Stückgutlagen vorgesehen, die die Palette in eine Höhe verbringt, so dass die jeweilig auf die Transporteinrichtung zu überführende oberste Stückgutlage in einer der Höhe des Verschieberahmens entsprechenden Höhe angeordnet ist.

Mit der hier beschriebenen Vorrichtung und dem Verfahren ist es somit möglich, bei einer Produktumstellung, die Vorrichtung in deutlich reduzierter Umstellzeit an das neue Produkt anzupassen und/oder Stückgüter zu verarbeiten, die in unterschiedlich ausgebildeten Stückgutlagen übereinandergestapelt sind.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine seitliche Darstellung einer ersten Ausführungsform einer Vorrichtung zum schichtweisen Entladen von übereinander gestapelten Stückgutlagen.
Fig. 2 zeigt ein Detail der Abschiebestation gemäß Fig. 1 in perspektivischer Darstellung.
Figuren 3A bis 3F zeigen schematisch einen Verfahrensablauf beim schichtweisen Entladen von übereinander gestapelten Stückgutlagen mit einer Vorrichtung gemäß der in Fig. 1 dargestellten ersten Ausführungsform.
Figuren 4A bis 4E zeigen unterschiedliche perspektivische Ansichten einer Fixiervorrichtung.
Fig. 5 zeigt eine seitliche Darstellung einer zweiten Ausführungsform einer Vorrichtung zum schichtweisen Entladen von übereinander gestapelten Stückgutlagen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

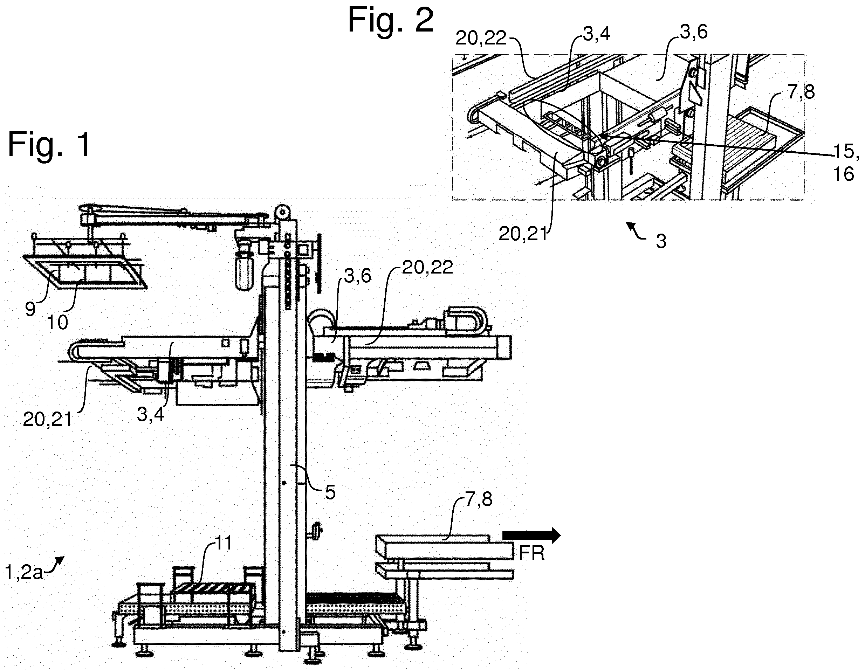

Die schematische Ansicht der Fig. 1 zeigt eine seitliche Darstellung einer ersten Ausführungsform einer Vorrichtung 1 zum schichtweisen Entladen von übereinander gestapelten Stückgutlagen, welche nachfolgend insbesondere als Handhabungsvorrichtung 2a bezeichnet wird. In Fig. 1 ist beispielhaft eine Palette 9 ohne übereinandergestapelte und durch Zwischenlagen voneinander getrennte Stückgutlagen dargestellt. Fig. 2 zeigt ein Detail der Abschiebestation 3 der Handhabungsvorrichtung 2a gemäß Fig. 1 in perspektivischer Darstellung.

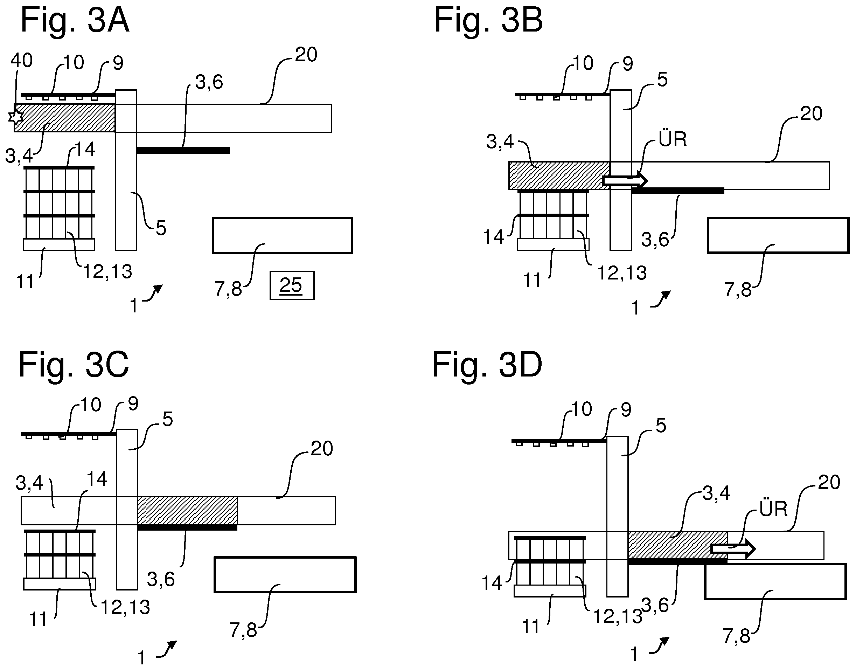

Die Figuren 3A bis 3F zeigen schematisch einen Verfahrensablauf beim schichtweisen Entladen von übereinander gestapelten Stückgutlagen 10 mit einer Handhabungsvorrichtung 2a gemäß Fig. 1.

Die Vorrichtung 1 oder Handhabungsvorrichtung 2a umfasst eine Abschiebestation 3, die vorzugsweise mit mindestens einem Niveauausgleich ausgestattet ist, insbesondere sind die Komponenten der Abschiebestation 3 an einer Hubsäule 5 höhenverstellbar angeordnet. Die Abschiebestation 3 umfasst einen vierseitig zentrierenden Verschieberahmen 4 für die jeweiligen Stückgutlagen 12 und eine Überschubplatte 6, auf die die jeweilige Stückgutlage 12 übergeschoben wird. Die Abschiebestation 3 umfasst insbesondere einen Rahmen 20, innerhalb dessen der Verschieberahmen 4 horizontalbeweglich angeordnet ist. Der Rahmen 20 ist höhenverstellbar an der Hubsäule 5 angeordnet, so dass durch eine Einstellung des Höhenniveaus des Rahmens 20 das Höhenniveau des Verschieberahmens 4 eingestellt wird. Der Rahmen 20 begrenzt insbesondere den Bewegungsbereich des Verschieberahmens 4 innerhalb einer jeweiligen Horizontalebene.

Der Rahmen 20 mit dem Verschieberahmen 4 wird von oben über die zu transferierende Stückgutlage 12 gestülpt (Fig. 3B) und die vierseitig zentrierenden Seitenbegrenzungen des Verschieberahmens 4 werden derart gegeneinander zugestellt, dass sie die Stückgüter 13 innerhalb der Stückgutlage 12 in ihrer Position relativ zueinander fixieren, beispielsweise gegeneinander klemmen. Insbesondere werden die jeweils parallel zueinander angeordneten Seitenbegrenzungen des Verschieberahmens 4 dabei gegeneinander zugestellt.

Die Überschubplatte 6 ist vorzugsweise ebenfalls vertikalbeweglich ausgebildet und wird über einen geeigneten Hubmechanismus in einer Höhe angeordnet, so dass sich die Oberseite der Überschubplatte 6 und die unterhalb der obersten Stückgutlage 12 angeordnete Zwischenlage 14 im Wesentlichen in einer Horizontalebene befinden (Fig. 3B). Vorzugsweise kann vorgesehen sein, dass die Überschubplatte 6 in einer Höhe angeordnet wird, die sich geringfügig unterhalb der Zwischenlage 14 befindet. Durch eine in Fig. 3B mittels eines Pfeils angedeutete Horizontalbewegung des Verschieberahmens 4 in Richtung der Überschubplatte 6 wird die Stückgutlage in Überschubrichtung ÜR auf die Überschubplatte 6 übergeschoben (Fig. 3C).

Nunmehr wird die mit der Stückgutlage 12 beladene Überschubplatte 6 auf das Höhenniveau eines Ablauftisches 7 gebracht. Dabei wird die Stückgutlage 12 weiterhin durch den Verschieberahmen 4 fixiert, insbesondere bewegen sich in diesem Verfahrensschritt die Überschubplatte 6 und der Rahmen 20 mit dem Verschieberahmen 4 synchron (Fig. 3D).

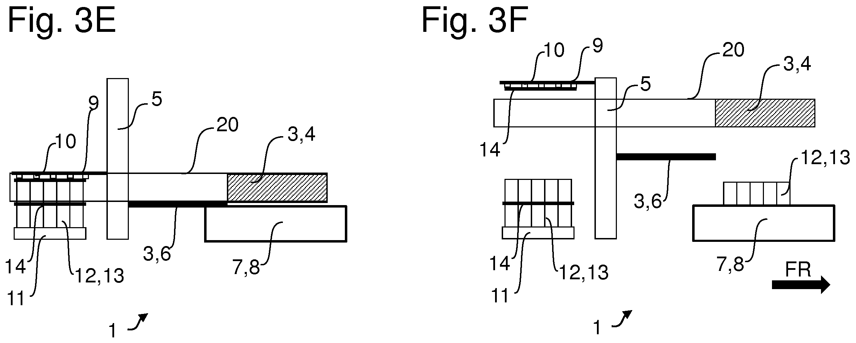

Vorzugsweise kann vorgesehen sein, dass die Überschubplatte 6 und der Rahmen 20 in einer Höhe angeordnet werden, die sich geringfügig oberhalb der Förderfläche des Ablauftisches 7 befindet. Nachdem die Überschubplatte 6 sowie der Rahmen 20 mit dem Verschieberahmen 4 und die innerhalb des Verschieberahmens 4 aufgenommenen Stückgutlage 12 im Wesentlichen auf dem Höhenniveau des Ablauftisches 7 angeordnet sind, wird die Stückgutlage 12 durch eine in Fig. 3D mittels eines Pfeils angedeutete Vertikalbewegung des Verschieberahmens 4 in Überschubrichtung ÜR auf den Ablauftisch 7 übergeschoben (Fig. 3E).

Der Rahmen 20 mit dem Verschieberahmen 4 und die Überschubplatte 6 werden nach oben bewegt, so dass die Stückgutlage 12 nunmehr auf dem Ablauftisch 7 angeordnet ist (Fig. 3F). Der Ablauftisch 7 wird beispielsweise durch ein Förderband 8 o.ä. gebildet, über das die Stückgutlage 12 in Förderrichtung FR abtransportiert und weiterverarbeitenden Vorrichtungen (nicht dargestellt) zugeführt werden kann.

Weiterhin ist ein ebenfalls höhenverstellbarer Zwischenlagenheber 9 vorgesehen, der beispielsweise mehrere Vakuumsauger 10 o.ä. zum Abheben und Entfernen der jeweils unterhalb der übergeschobenen (obersten) Stückgutlage 12 befindlichen Zwischenlage 14 umfassen kann. Die Zwischenlage 14 wird beispielsweise entfernt, während sich die Stückgutlage 12 auf der Überschubplatte 6 befindet oder während die Stückgutlage 12 auf den Ablauftisch 7 übergeschoben wird (Figuren 3E, 3F).

Gegebenenfalls kann vorgesehen sein, dass die Palette 11 mit den übereinander angeordneten Stückgutlagen 12 auf einem Hubtisch angeordnet ist, um diese bei Bedarf auf eine geeignete Höhe zu bringen.

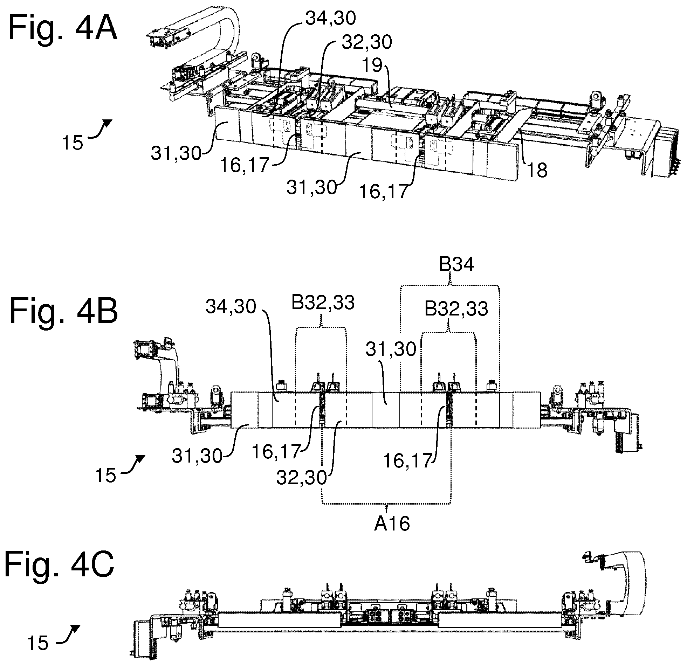

Wie in Fig. 2 dargestellt, umfasst die Vorrichtung 1, insbesondere die Abschiebestation 3 der Handhabungsvorrichtung 2a, weiterhin eine Fixiervorrichtung 15 zum Fixieren der unter der jeweilig abzuschiebenden obersten Stückgutlage 12 angeordneten Zwischenlage 14 beim Abschieben der Stückgüter 13 auf die Überschubplatte 6. Die Fixiervorrichtung 15 umfasst dabei insbesondere mindestens zwei Fixiermittel 15, die gegeneinander verstellbar ausgebildet sind, wobei insbesondere ein Abstand A16 zwischen den mindestens zwei Fixiermitteln 16 verstellt werden kann (vgl. Fig. 4B).

Die Fixiervorrichtung 15 ist am Rahmen 20 der Abschiebestation 3 angeordnet und somit mit diesem vertikalbeweglich. Während des Überschiebens der Stückgutlage 12 in Überschubrichtung ÜR durch den Verschieberahmen 4 der Abschiebestation 3 greifen die Fixiermittel 16 an der unterhalb der jeweiligen Stückgutlage 12 befindlichen Zwischenlage 14 an und verhindern dadurch ein Mitnehmen der Zwischenlage 14 in Richtung der Überschubplatte 6.

Der Rahmen 20 umfasst insbesondere zwei parallele erste Rahmenelemente 21, die quer zur Überschubrichtung ÜR der Stückgutlage 12 von der Palette 11 auf die Überschubplatte 6 ausgerichtet sind, sowie weiterhin zwei parallele zweite Rahmenelemente 22, die sich jeweils zwischen den ersten Rahmenelementen 21 erstrecken und senkrecht zu diesen ausgebildet sind. Somit erstrecken sich die zweiten Rahmenelemente 22 parallel zur Überschubrichtung ÜR. Insbesondere ist die Fixiervorrichtung 15 dem in Überschubrichtung ÜR hinteren ersten Rahmenelement 21 des Rahmens 20 zugeordnet. Die Fixiervorrichtung 15 ist dabei vorzugsweise unterhalb des Bewegungsbereichs des Verschieberahmens 4 am Rahmen 20 angeordnet.

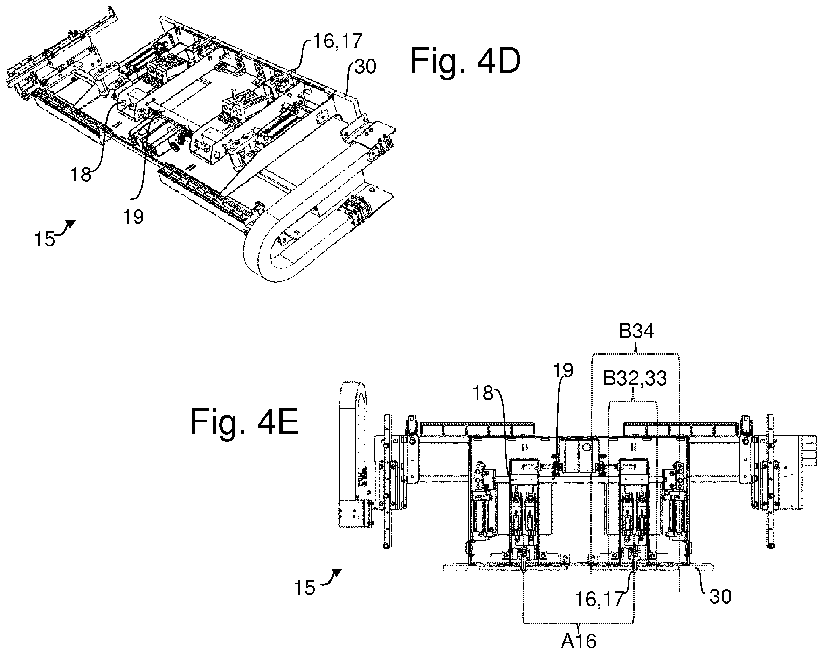

Die Figuren 4A bis 4E zeigen unterschiedliche perspektivische Ansichten der Fixiervorrichtung 15. Insbesondere zeigen die Figuren 4A und 4B Ansichten, bei denen die zur Stückgutlage 12 und Zwischenlage 14 (vgl. Figuren 3) hinweisende Seite der Fixiervorrichtung 15 sichtbar ist. Die Fig. 4C zeigt die Fixiervorrichtung 15 von hinten, die Fig. 4D zeigt eine perspektivische Darstellung, während die Fig. 4E eine Darstellung von oben zeigt.

Die Fixiervorrichtung 15 umfasst zwei Fixiermittel 16, die beispielsweise jeweils durch Zangengreifer 17 gebildet sind. Diese können beispielsweise pneumatisch oder elektrisch betrieben werden, insbesondere geöffnet und geschlossen. Zum Fixieren der jeweiligen Zwischenlage 14 werden die Zangengreifer 17 zumindest teilweise in Richtung der Zwischenlage 14 bewegt und greifen diese beispielsweise zwischen Klemmbacken o.ä. Die Zangengreifer 17 können dabei jeweils individuell oder gemeinsam angesteuert werden. Die Zangengreifer 17 greifen an der Zwischenlage 14 unterhalb einer zu überschiebenden Stückgutlage 12 an und halten diese während des Abschiebevorgangs fest (Fig. 3B). Nachdem die Stückgutlage 12 auf die Überschubplatte 6 übergeschoben worden ist, werden die Zangengreifer 17 geöffnet und somit die Fixierung der Zwischenlage 14 durch die Zangengreifer 17 beendet, so dass die Zwischenlage 14 nunmehr durch den Zwischenlagenheber 9 erfasst und in eine geeignete Ablage überführt werden kann.

Damit die Zangengreifer 17 beim Festhalten der Zwischenlage 14 nicht gegen Stückgüter 13 der Stückgutlage 12 stoßen und diese dadurch beschädigen, verschieben oder umkippen etc., ist es sinnvoll, wenn die Zangengreifer 17 jeweils in Bereichen zwischen einzelnen Stückgütern 13 an der Zwischenlage 14 angreifen. Diese sogenannten Fixierbereiche sind jeweils von der Größe, Form und Anordnung der Stückgüter 13 innerhalb der Stückgutlage 12 abhängig. Insbesondere muss bei einem Produktwechsel auch die Position der Zangengreifer 17 angepasst werden, damit diese auch bei dem neuen Produkt jeweils zwischen den Stückgütern 13 an der Zwischenlage 14 angreifen.

Bei der Vorrichtung 1 ist vorgesehen, dass die Fixiermittel 16, d.h. die Zangengreifer 17, in einer gemeinsamen Horizontalebene angeordnet sind und innerhalb der Horizontalebene gegeneinander verstellbar ausgebildet sind, so dass ein Abstand A16 zwischen den Zangengreifern 17 innerhalb der Horizontalebene und quer zur Überschubrichtung ÜR sowie quer zur Förderrichtung FR eingestellt werden kann (vgl. Fig. 4B). Damit ist eine schnelle und einfache Anpassung der Position der Zangengreifer 17 relativ zu den Stückgütern 13 der zu handhabenden Stückgutlage 12 möglich. Die Einstellung der horizontalen Position kann beispielsweise über ein Schienensystem erfolgen. Jeder Zangengreifer 17 und gegebenenfalls der elektrische oder pneumatische Antrieb des Zangengreifers 17 befindet sich auf einem Laufschlitten 18. Die Laufschlitten 18 sind an einer horizontal ausgerichteten Laufschiene 19 angeordnet, so dass über eine Verschiebung der Laufschlitten 18 entlang der Laufschiene 19 die Position der Zangengreifer 17 relativ zueinander und relativ zu den Stückgütern 13 der Stückgutlage 12 verstellt werden kann. Die Verstellung wird vermittels einer Steuerungseinheit 25 angesteuert werden, die in Fig. 3A beispielhaft dargestellt ist, und die der Ansteuerung der verschiedenen Maschinenkomponenten der Vorrichtung 1 dient.

Die Fixiervorrichtung 15 ist dem Rahmen 20 zugeordnet, insbesondere einem quer zur Überschubrichtung ÜR angeordneten hinteren ersten Rahmenelement 21. D.h. die Fixiermittel 16 sind gemeinsam mit dem Rahmen 20 in der Höhe verstellbar. Während sich der Verschieberahmen 4 mit der Stückgutlage 12 in Überschubrichtung ÜR zur Überschubplatte 6 bewegt, verbleiben die Fixiermittel 16 in ihrer Position und halten die Zwischenlage 14 fest, so dass diese nicht mit den Stückgütern 13 in Überschubrichtung ÜR mitgezogen werden kann.

Alternativ wäre denkbar, die Fixiervorrichtung 15 im hinteren Bereich der zweiten Rahmenelemente 22 anzuordnen. Dabei ist darauf zu achten, dass die Fixiervorrichtung 15 die Bewegung des Verschieberahmens 4 in Überschubrichtung ÜR nicht behindern. Zudem müssten sinnvollerweise zwei einander gegenüberliegende Fixiervorrichtungen 15 vorgesehen sein, um die Zwischenlage 14 an den gegenüberliegenden Seiten zu fixieren. Ansonsten bestünde die Gefahr, dass die Zwischenlage 14 beim Überschieben der Stückgüter 12 einseitig mitgezogen wird und gegebenenfalls reißt und/oder anderweitig den Produktionsablauf stört.

Weiterhin ist vorgesehen, dass den Fixiermitteln 16 jeweils mindestens eine Abdeckvorrichtung 30 zugeordnet ist. Die Fixiervorrichtung 15 ist beispielsweise über eine Blendenleiste 31 in Richtung der Stückgutlage 12 teilweise verblendet, damit umfallende Stückgüter 13 nicht in die Komponenten der Fixiervorrichtung 15 hineinfallen und diese beschädigen können. Die Blendenleiste 31 ist für die Fixiermittel 16 bereichsweise unterbrochen, damit diese an die Zwischenlage 14 angreifen können. Insbesondere weisen die Unterbrechungen 32 der Blendenleiste 31 eine Breite B32 auf, die deutlich breiter ist als die jeweiligen Fixiermittel 16.

Insbesondere bildet die Breite B32 der Unterbrechungen 32 einen Verstellbereich 33 für die Fixiermittel 16. Weiterhin umfasst die Abdeckvorrichtung 30 jeweils beweglich ausgebildete Blendenbereiche 34. Diese sind insbesondere jeweils beidseitig zu den Fixiermitteln 16 angeordnet und vorzugsweise gemeinsam mit diesen beweglich der Blendenleiste 31 zugeordnet. Insbesondere ist vorgesehen, dass die beiden ein Fixiermittel 16 begrenzenden Blendenbereiche 34 gemeinsam eine Breite B34 abdecken, die deutlich größer ist als die Breite B32 der Unterbrechung 32, so dass bei einer seitlichen Bewegung der Fixiermittel 16 innerhalb der Unterbrechung 32 vermittels der Blendenleiste 31 und der beweglichen Blendenbereiche 34 eine weitgehend geschlossene Verblendung der Fixiervorrichtung 15 in Richtung der Stückgutlage 12 besteht. Die Verblendung ist nur im Bereich der Fixiermittel 16 unterbrochen.

Die Abdeckvorrichtung 30 ist insbesondere jeweils zweiteilig aufgebaut und umfasst mindestens eine Blendenleiste 31 mit mindestens zwei Unterbrechungen 32, die jeweils den Bewegungsraum 33 der mindestens zwei Fixiermittel 16 bilden. Die Unterbrechungen 32 können jeweils durch Blendenbereiche 34 abgedeckt werden, die bewegliche gegenüber der mindestens einen Blendenleiste 31 ausgebildet sind, um eine weitgehend geschlossene Verblendung der Fixiervorrichtung 15 auszubilden.

Weiterhin ist in Fig. 3A ein Sensor 40 dargestellt. Der Sensor 40 dient der Erkennung der Stückguter 13 und/oder von Lücken zwischen den Stückgütern 13 innerhalb der jeweils obersten Stückgutlage 12 und ermittelt entsprechende Positionsdaten und/oder andere geeignete Erfassungswerte. Der Sensor 40 kann auch Randbereich der Zwischenlage 14 ermitteln, in denen keine Stückgüter 13 auf der Zwischenlage 14 aufstehen. Insbesondere erkennt der Sensor 40 die Art und/oder Form und/oder Anordnung der Stückgüter 12, die sich am hinteren Rand der obersten Stückgutlage 12 befinden. Diese Informationen werden an die Steuerungseinheit 25 übermittelt. Aus den Daten werden insbesondere die Informationen generiert, die besagen, an welchen Bereichen der Zwischenlage 14 die Fixiermittel 16 gefahrlos angreifen können, ohne Stückgüter 13 zu berühren und somit gegebenenfalls zu beschädigen, zu verschieben o.ä. Insbesondere wird ein zwischen mindestens zwei benachbarten Fixiermitteln 16 einzustellender Abstand A16 ermittelt.

Es ist vorgesehen, dass die Steuerungseinheit 25 nunmehr anhand des ermittelten Abstandswerts die Verstellung der Fixiermittel 16 ansteuert, so dass die Position der Fixiermittel 16 relativ zueinander automatisch an das jeweilige Lagenbild der Stückgutlage 12 angepasst werden kann. Somit ist es möglich, mit der Vorrichtung 1 auch Paletten 11 mit einer Mehrzahl an unterschiedlich ausgebildeten Stückgutlagen 12 sicher, einfach und schnell zu entladen, wobei die Anordnung der Fixiermittel 16 relativ zueinander an die jeweilig zu handhabende Stückgutlage 12 automatisch optimal angepasst werden kann.

Der Sensor 40 kann beispielsweise eine Bilderkennungseinheit 41 sein, alternativ kann der Sensor 40 eine Abstandsmessung durchführen o.ä.

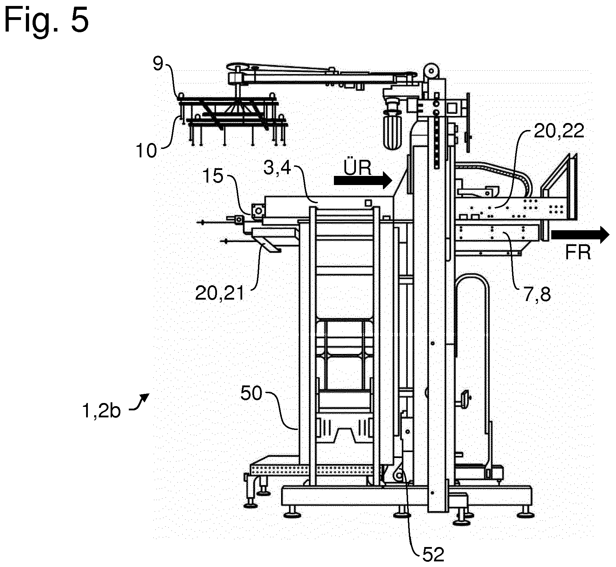

Die Fig. 5 zeigt eine seitliche Darstellung einer zweiten Ausführungsform einer Vorrichtung 1 zum schichtweisen Entladen von übereinander gestapelten Stückgutlagen, welche nachfolgend insbesondere als Handhabungsvorrichtung 2b bezeichnet wird. Die Handhabungsvorrichtung 2b umfasst einen Zentrierschacht 50. Die Palette mit den übereinandergestapelten und mittels Zwischenlagen voneinander abgetrennten Stückgutlagen (nicht sichtbar) wird innerhalb des Zentrierschachts 50 angeordnet. Dem Zentrierschacht 50 ist eine Hubeinrichtung 52 für die Palette zugeordnet.

Die Vorrichtung 1 oder Handhabungsvorrichtung 2b umfasst eine Abschiebestation 3, die vorzugsweise in einer definierten Höhe angeordnet ist. Unterhalb der Abschiebestation 3 und benachbart zu dem Zentrierschacht 50 ist der Ablauftisch 7 angeordnet, über den die jeweilig von der Palette auf den Ablauftisch 7 übergeschobene Stückgutlage beispielsweise über ein Förderband 8 oder eine andere geeignete Transporteinrichtung in Förderrichtung FR der weiteren Verarbeitung zugeführt werden kann.

Die Abschiebestation 3 umfasst einen Verschieberahmen 4 für die jeweiligen Stückgutlagen. Die Abschiebestation 3 umfasst insbesondere einen oberhalb des Zentrierschachts 50 und zumindest teilweise oberhalb des Ablauftisches 7 angeordneten Rahmen 20, innerhalb dessen der Verschieberahmen 4 horizontalbeweglich ausgebildet ist, wobei der Bewegungsbereich des Verschieberahmens 4 innerhalb einer Horizontalebene durch den Rahmen 20 begrenzt wird.

Die Palette mit den übereinander gestapelten Stückgutlagen wird innerhalb des Zentrierschachts 50 über die Hubeinrichtung 52 angehoben, so dass sich die oberste Stückgutlage innerhalb des in einer ersten Arbeitsposition oberhalb des Zentrierschachts angeordneten Verschieberahmens 4 befindet. Vorzugsweise ist bei dem Verschieberahmen 4 eine vierseitige Lagenzentrierung vorgesehen, insbesondere werden enden vierseitig zentrierende Seitenbegrenzungen des Verschieberahmens 4 derart gegeneinander zugestellt, dass sie die Stückgüter innerhalb der obersten Stückgutlage in ihrer Position relativ zueinander fixieren, beispielsweise gegeneinander klemmen.

Durch eine Horizontalbewegung des Verschieberahmens 4 in Überschubrichtung ÜR wird die oberste Stückgutlage auf den Ablauftisch 7 übergeschoben. Gegebenenfalls kann zwischen dem Zentrierschacht 50 und dem Ablauftisch 7 eine Überschubplatte angeordnet sein. Alternativ kann vorgesehen sein, dass der Ablauftisch 7 direkt an den Zentrierschacht 50 angrenzend angeordnet ist.

Während die oberste Stückgutlage vermittels des Verschieberahmens 4 auf den Ablauftisch 7 überführt wird, wird die unterhalb der obersten Stückgutlage angeordnete Zwischenlage durch eine Fixiervorrichtung 15 fixiert. Die Fixiervorrichtung ist dabei vorzugsweise derart ausgebildet, wie es im Zusammenhang mit den Figuren 1 bis 4 beschrieben worden ist, auf deren Beschreibung hiermit verwiesen wird.

Sobald sich die oberste Stückgutlage auf den Ablauftisch 7 befindet, wird die in Überschubrichtung vorauseilende Seitenbegrenzung des Verschieberahmens 4 geöffnet, beispielsweise nach oben weggeschwenkt oder durch eine nach oben gerichtete Vertikalbewegung nach oben verschoben, so dass die Stückgüter über das Förderband 8 in Förderrichtung FR abtransportiert werden können.

Weiterhin ist auch bei dieser Ausführungsform ein höhenverstellbarer Zwischenlagenheber 9 vorgesehen, der beispielsweise mehrere Vakuumsauger 10 o.ä. zum Abheben und Entfernen der jeweils unterhalb der übergeschobenen (obersten) Stückgutlage befindlichen Zwischenlage umfassen kann. Die Zwischenlage wird beispielsweise entfernt, nachdem die jeweilig oberste Stückgutlage auf den Ablauftisch 7 übergeschoben worden ist.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2a, 2b: Handhabungsvorrichtung
- 3: Abschiebestation
- 4: vierseitig zentrierender Verschieberahmen
- 5: Hubsäule
- 6: Überschubplatte
- 7: Ablauftisch
- 8: Förderband
- 9: Zwischenlagenheber
- 10: Vakuumsauger
- 11: Palette
- 12: Stückgutlage
- 13: Stückgut
- 14: Zwischenlage
- 15: Fixiervorrichtung
- 16: Fixiermittel
- 17: Zangengreifer
- 18: Laufschlitten
- 19: Laufschiene
- 20: Rahmen
- 21: erstes Rahmenelement
- 22: zweites Rahmenelement
- 25: Steuerungseinheit
- 30: Abdeckvorrichtung
- 31: Blendenleiste
- 32: Unterbrechung
- 33: Verstellbereich
- 34: beweglicher Blendenbereich
- 40: Sensor
- 50: Zentrierschacht
- 52: Hubeinrichtung
- A16: Abstand
- B32: Breite der Unterbrechung
- B34: gemeinsame Breite zweier Blendenbereiche
- FR: Förderrichtung
- ÜR: Überschubrichtung

## Patentansprüche

1. Vorrichtung (1) zur schichtweisen Handhabung von übereinander angeordneten Stückgutlagen (12), jede Stückgutlage (12) umfassend eine Mehrzahl von Stückgütern (13), wobei zwischen den Stückgutlagen (12) jeweils eine flächig ausgebildete Zwischenlage (14) angeordnet ist, die Vorrichtung (1) umfassend:
• mindestens einen Rahmen (20) umfassend einen horizontal beweglichen Verschieberahmen (4) für die Stückgutlage;
• mindestens einen Zwischenlagenentnahmevorrichtung (9);
• mindestens eine Fixiervorrichtung (15) zum Fixieren einer Zwischenlage (14) beim Abschieben der Stückgüter (13) einer auf diese Zwischenlage (14) angeordneten obersten Stückgutlage,
• wobei die Fixiervorrichtung (15) mindestens zwei Fixiermittel (16) umfasst, die gegeneinander verstellbar ausgebildet sind,
**dadurch gekennzeichnet, dass** die Vorrichtung weiter
• mindestens einen Sensor (40) zur Erkennung der Stückgüter (13) einer obersten Stückgutlage (12) und/oder zur Erkennung der unterhalb der obersten Stückgutlage (12) angeordneten Zwischenlage (14) umfasst,
• wobei der mindestens eine Sensor (40) Positionsdaten und/oder andere Erfassungswerte der Stückgüter (13) und/oder der Zwischenlage (14) ermittelt, an eine Steuerungseinrichtung (25) der Vorrichtung (1) übermittelt, aus diesen Positionsdaten und/oder Erfassungswerten einen zwischen den mindestens zwei Fixiermitteln (16) einzustellenden Abstand ermittelt und die Position der Fixiermittel (16) dementsprechend einstellt.

2. Vorrichtung (1) nach Anspruch 1, wobei die Fixiermittel (16) in einer gemeinsamen Horizontalebene angeordnet sind und wobei ein Abstand zwischen den Fixiermitteln (16) innerhalb der Horizontalebene einstellbar ist.

3. Vorrichtung (1) nach Anspruch 1 oder 2, wobei die Fixiermittel (16) als Zangengreifer (17) ausgebildet sind.

4. Vorrichtung (1) nach Anspruch 3, wobei die Fixiermittel (16) pneumatisch oder elektrisch oder elektromotorisch betätigbar sind.

5. Vorrichtung (1) nach einem der vorgenannten Ansprüche, wobei die Fixiervorrichtung (15) dem Rahmen (20) zugeordnet und an einem quer zu einer Überschubrichtung (ÜR) oder Förderrichtung (FR) beim Handhaben der Stückgüter (13) angeordneten hinteren Rahmenelement (21) des Rahmens (20) angeordnet sind.

6. Vorrichtung (1) nach Anspruch 5, wobei ein Abstand zwischen den Fixiermitteln (16) quer zu der Überschubrichtung (ÜR) beim Abschieben der Stückgutlagen (12) einstellbar ist.

7. Vorrichtung (1) nach einem der vorgenannten Ansprüche, wobei den Fixiermitteln (16) mindestens eine Abdeckvorrichtung (30) zugeordnet ist.

8. Vorrichtung (1) nach Anspruch 7, wobei die mindestens eine Abdeckvorrichtung (30) einen Bereich zwischen den mindestens zwei Fixiermitteln (16) abdeckt und/oder einen Bereich seitlich zu einem der mindestens zwei Fixiermittel (16) abdeckt.

9. Vorrichtung (1) nach Anspruch 7 oder 8, wobei die mindestens eine Abdeckvorrichtung (30) zumindest zweiteilig ausgebaut ist.

10. Vorrichtung (1) nach Anspruch 9, wobei die mindestens zwei Teile der Abdeckvorrichtung (30) gegeneinander beweglich ausgebildet sind.

11. Verfahren zur schichtweisen Handhabung von übereinander und auf flächig ausgebildeten Zwischenlagen (14) angeordneten Stückgutlagen (12) vermittels einer Vorrichtung (1) gemäß einem der Ansprüche 1 bis 10,
• wobei die jeweilig oberste Stückgutlage (12) auf eine weiterführende Transporteinrichtung übergeschoben wird,
• wobei die unterhalb der obersten Stückgutlange angeordnete Zwischenlage (14) beim Abschieben der obersten Stückgutlage (12) vermittels einer Fixiervorrichtung (15) umfassend mindestens zwei Fixiermittel (16) fixiert wird, und
• wobei die mindestens zwei Fixiermittel (16) gegeneinander verstellt werden können.

## Claims

1. A device (1) for the layer-wise handling of piece good layers (12) arranged on top of each other, each piece good layer (12) comprising a plurality of piece goods (13), wherein a flatly designed intermediate layer (14) is arranged between each of the piece good layers (12), the device (1) comprising:
• at least one frame (20) comprising a horizontally movable sliding frame (4) for the piece good layer;
• at least one device (9) for the removal of intermediate layers;
• at least one securing device (15) for securing an intermediate layer (14) when the piece goods (13) of an uppermost piece good layer arranged on this intermediate layer (14) are being pushed off,
• wherein the securing device (15) comprises at least two securing means (16) which are designed to be adjustable toward each other,
**characterised in that** the device further
• comprises at least one sensor (40) for identifying the piece goods (13) of an uppermost piece good layer (12) and/or for identifying the intermediate layer (14) arranged below the uppermost piece good layer (12),
• wherein the at least one sensor (40) determines position data and/or other detection values of the piece goods (13) and/or of the intermediate layer (14), transmits the position data and/or detection values to a control apparatus (25) of the device (1), from these position data and/or detection values determines a distance to be set between the at least two securing means (16), and sets the position of the securing means (16) accordingly.

2. The device (1) according to claim 1, wherein the securing means (16) are arranged in a common horizontal plane, and wherein a distance between the securing means (16) is adjustable within the horizontal plane.

3. The device (1) according to claim 1 or 2, wherein the securing means (16) are designed as tong grippers (17).

4. The device (1) according to claim 3, wherein the securing means (16) are actuable in a pneumatic or electric or electromotive manner.

5. The device (1) according to one of the preceding claims, wherein the securing device (15) is assigned to the frame (20) and is arranged on a rear frame element (21) of the frame (20) arranged transversely to a transfer direction (ÜR) or conveying direction (FR) in the handling of the piece goods (13).

6. The device (1) according to claim 5, wherein a distance between the securing means (16) transverse to the transfer direction (ÜR) is adjustable when the piece good layers (12) are being pushed off.

7. The device (1) according to one of the preceding claims, wherein at least one cover device (30) is assigned to the securing means (16).

8. The device (1) according to claim 7, wherein the at least one cover device (30) covers an area between the at least two securing means (16) and/or covers an area lateral to one of the at least two securing means (16).

9. The device (1) according to claim 7 or 8, wherein the at least one cover device (30) is constructed in at least two parts.

10. The device (1) according to claim 9, wherein the at least two parts of the cover device (30) are designed to be movable relative to each other.

11. A method for the layer-wise handling of piece good layers (12), which are arranged on top of each other and on flatly designed intermediate layers (14), by means of a device (1) according to one of the claims 1 to 10,
• wherein the particular uppermost piece good layer (12) is pushed over onto a proceeding transport device,
• wherein, when the uppermost layer of piece goods (12) is being pushed off, the intermediate layer (14) arranged below the uppermost piece good layer is secured by means of a securing device (15) comprising at least two securing means (16), and
• wherein the at least two securing means (16) can be adjusted toward each other.

## Revendications

1. Dispositif (1) de manipulation couche par couche de couches de produits de détail (12) superposées, chaque couche de produits de détail (12) comprenant une pluralité de produits de détail (13), dans lequel respectivement une couche intermédiaire (14) réalisée de manière plane est disposée entre les couches de produits de détail (12), le dispositif (1) comprenant:
• au moins un cadre (20) comprenant un cadre coulissant (4) mobile horizontalement pour la couche de produits de détail;
• au moins un dispositif à retirer la couche intermédiaire (9);
• au moins un dispositif de fixation (15) destiné à fixer une couche intermédiaire (14) lors du retrait par poussée des produits de détail (13) d'une couche de produits de détail la plus supérieure qui est disposée sur cette couche intermédiaire (14),
• dans lequel le dispositif de fixation (15) comprend au moins deux moyens de fixation (16) qui sont conçus de manière à être réglables l'un par rapport à l'autre,
**caractérisé par le fait que** le dispositif comprend en outre
• au moins un capteur (40) destiné à détecter les produits de détail (13) d'une couche de produits de détail la plus supérieure (12) et/ou à détecter la couche intermédiaire (14) disposée au-dessous de la couche de produits de détail la plus supérieure (12),
• dans lequel ledit au moins un capteur (40) détermine des données de position et/ou d'autres valeurs de détection des produits de détail (13) et/ou de la couche intermédiaire (14), transmet celles-ci à un dispositif de commande (25) du dispositif (1), détermine une distance à régler entre lesdits au moins deux moyens de fixation (16) à partir de ces données de position et/ou valeurs de détection, et ajuste par conséquent la position des moyens de fixation (16).

2. Dispositif (1) selon la revendication 1, dans lequel les moyens de fixation (16) sont disposés dans un plan horizontal commun, et dans lequel une distance entre les moyens de fixation (16) est réglable à l'intérieur du plan horizontal.

3. Dispositif (1) selon la revendication 1 ou 2, dans lequel les moyens de fixation (16) sont conçus en tant que pinces à préhension (17).

4. Dispositif (1) selon la revendication 3, dans lequel les moyens de fixation (16) peuvent être actionnés de manière pneumatique ou électrique ou par moteur électrique.

5. Dispositif (1) selon l'une quelconque des revendications précédentes, dans lequel le dispositif de fixation (15) est associé au cadre (20) et est disposé sur un élément arrière de cadre (21) du cadre (20), qui est disposé transversalement à une direction de transfert par poussée (ÜR) ou à une direction de transport (FR) lors de la manipulation des produits de détail (13).

6. Dispositif (1) selon la revendication 5, dans lequel une distance entre les moyens de fixation (16) est réglable transversalement à la direction de transfert par poussée (ÜR) lors du retrait par poussée des couches de produits de détail (12).

7. Dispositif (1) selon l'une quelconque des revendications précédentes, dans lequel au moins un dispositif de recouvrement (30) est associé aux moyens de fixation (16).

8. Dispositif (1) selon la revendication 7, dans lequel ledit au moins un dispositif de recouvrement (30) couvre une zone située entre lesdits au moins deux moyens de fixation (16) et/ou une zone située latéralement par rapport à l'un desdits au moins deux moyens de fixation (16).

9. Dispositif (1) selon la revendication 7 ou 8, dans lequel ledit au moins un dispositif de recouvrement (30) est constitué d'au moins deux parties.

10. Dispositif (1) selon la revendication 9, dans lequel lesdites au moins deux parties du dispositif de recouvrement (30) sont conçues de manière à être mobiles l'une par rapport à l'autre.

11. Procédé de manipulation couche par couche de couches de produits de détails (12) superposées et disposées sur des couches intermédiaires (14) réalisées de manière plane, par l'intermédiaire d'un dispositif (1) selon l'une quelconque des revendications 1 à 10,
• dans lequel la couche de produits de détail la plus supérieure (12) respective est transférée par poussée sur un dispositif de transport de continuation,
• dans lequel la couche intermédiaire (14) disposée au-dessous de la couche de produits de détail la plus supérieure est fixée au moyen d'un dispositif de fixation (15) comprenant au moins deux moyens de fixation (16), lorsque la couche de produits de détail la plus supérieure (12) est retirée par poussée, et
• dans lequel lesdits au moins deux moyens de fixation (16) peuvent être réglés l'un par rapport à l'autre.
